# EUROPÄISCHE PATENTSCHRIFT

(11) **EP 3 273 150 B1**
(45) Veröffentlichungstag und Bekanntmachung des Hinweises auf die Patenterteilung: **06.11.2019**
(21) Anmeldenummer: 16180418.2
(22) Anmeldetag: 20.07.2016
(51) Int. Cl.: F21V 5/00, F21V 5/04, F21L 14/02, G01N 21/88, F21W 131/40, F21Y 115/10, F21Y 103/10, F21V 15/01, F21V 23/00, F21V 17/16, F21V 1/00, E04F 13/02, E04F 21/02

(54) **KONTROLLLEUCHTE, AUSLEUCHTUNGSVORRICHTUNG SOWIE VERFAHREN ZUR KONTROLLE VON OBERFLÄCHENSTRUKTUREN**
CONTROL LAMP, ILLUMINATION DEVICE AND METHOD OF CONTROLLING SURFACE STRUCTURES
LAMPE DE CONTROLE, DISPOSITIF D'ECLAIRAGE ET PROCEDE DE CONTROLE DE STRUCTURES DE SURFACE

(43) Veröffentlichungstag der Anmeldung: 24.01.2018
(73) Patentinhaber: Festool GmbH, 73240 Wendlingen am Neckar (DE)
(72) Erfinder: Reines, Wolfgang, 72655 Altdorf (DE)
(74) Vertreter: Patentanwälte Magenbauer & Kollegen Partnerschaft mbB

(56) Entgegenhaltungen:
- EP-A1- 1 783 532
- EP-A2- 1 089 069
- DE-A1-102009 014 706
- DE-A1-102014 005 512
- JP-A- 2012 243 547
- US-A1- 2004 233 662
- US-A1- 2013 329 436
- US-B1- 6 798 525

## Beschreibung

Die Erfindung betrifft eine Kontrollleuchte, eine Ausleuchtungsvorrichtung sowie ein Verfahren zur Kontrolle von Oberflächenstrukturen.

Bei Ausbauarbeiten, beispielsweise beim Verputzen von Wänden, ist es oftmals notwendig, Oberflächenstrukturen zu kontrollieren. Häufig wird die Ebenheit von verputzten Wandoberfläche geprüft. Typischerweise wird die zu prüfende Wandoberfläche beleuchtet, so dass eventuelle Unebenheiten sichtbar gemacht werden. Konventionell werden zur Beleuchtung der Wandoberfläche Baustrahler eingesetzt, die auf einem Stativ angebracht sind.

Die EP 1 783 532 A1 beschreibt eine Beleuchtungsvorrichtung, mit einer Basis, einem sich von der Basis vertikal nach oben erstreckenden Fuß, einem Schwenkarm und einem am Schwenkarm befestigten Gehäuse mit einer Lichtleiste. Die Beleuchtungsvorrichtung dient dazu, eine Oberfläche zu inspizieren.

Die US 6 798 525 B1 beschreibt ein System zur Inspektion von Oberflächen. Eine Beleuchtungsvorrichtung umfasst eine längliche Lichtquelle sowie ein das Licht führendes Lamellenbündel.

Die DE 10 2009 014 706 A1 beschreibt eine Leuchte mit einem Leuchtenkopf, der von einem Standrohr abgenommen werden kann und als mobile Handleuchte verwendet werden kann.

Eine Aufgabe der Erfindung besteht darin, eine Kontrollleuchte bereitzustellen, mit der Oberflächenstrukturen in einfacher und praktischer Weise kontrolliert werden können.

Diese Aufgabe wird durch eine Kontrollleuchte gemäß Anspruch 1 gelöst. Die erfindungsgemäße Kontrollleuchte ist als Handleuchte ausgeführt und weist ein sich in einer Längsrichtung erstreckendes, längliches Gehäuse auf. In dem Gehäuse sind eine LED-Anordnung und eine sich in der Längsrichtung erstreckende, längliche Kollimatoroptik angeordnet. Die Kollimatoroptik ist ausgebildet, von der LED-Anordnung emittiertes Licht zu einem sich in der Längsrichtung erstreckenden Lichtbündel zu bündeln. Der Öffnungswinkel des Lichtbündels beträgt in einer zur Längsrichtung orthogonalen Querrichtung weniger als 20 Grad.

Erfindungsgemäß wird demnach eine als Handleuchte ausgeführte Kontrollleuchte mit einem länglichen Gehäuse bereitgestellt. Als Handleuchte soll in diesem Zusammenhang insbesondere eine Leuchte bezeichnet werden, die insbesondere in Bezug auf ihr Gewicht und ihre Abmessungen derart ausgestaltet ist, dass sie mit einer Hand ergriffen und getragen werden kann. Die Handleuchte ist frei bewegbar und positionierbar. Eine Handleuchte kann im Gegensatz zu den vorstehend erwähnten, typischerweise auf einem Stativ installierten Baustrahlern schnell und einfach umpositioniert werden, so dass es möglich wird, ohne größere Kraftanstrengung eine Vielzahl von verschiedenen Wandabschnitten hintereinander anzustrahlen und zu begutachten.

Mit Hilfe der länglichen Kollimatoroptik der erfindungsgemäßen Kontrollleuchte wird ein längliches Lichtbündel erzeugt, mit dem in Längsrichtung ein großer Wandabschnitt beleuchtet und begutachtet werden kann. Zweckmäßigerweise ist die Intensität des Lichtbündels in Längsrichtung im Wesentlichen konstant. Auf diese Weise kann eine in Längsrichtung gleichmäßige Beleuchtung erfolgen, die es erleichtert, Wandunebenheiten zu erkennen.

Der Öffnungswinkel des erzeugten Lichtbündels beträgt weniger als 20 Grad in einer zur Längsrichtung orthogonalen Querrichtung. Mit Hilfe eines derart schmalen Lichtbündels wird es möglich, einen großen Wandbereich unter einem flachen Winkel anzustrahlen. Ein flacher Winkel ist von Vorteil, da unter einem flachen Winkel angestrahlte Wandunebenheiten lange Schatten werfen und dadurch besonders gut sichtbar werden.

Mit einem länglichen Gehäuse bzw. einer länglichen Kollimatoroptik ist insbesondere ein Gehäuse bzw. eine Kollimatoroptik gemeint, das/die mehr als fünfmal so lang wie breit und tief ist. Vorzugsweise ist das Gehäuse bzw. die Kollimatoroptik mehr als zehnmal so lang wie breit und tief.

Das Gehäuse verfügt über senkrecht zur Querrichtung verlaufende seitliche Längsseiten, die derart ausgestaltet sind, dass bei kippstabiler Anlage der seitlichen Längsseiten an einer im Wesentlichen ebenen Wand ein Richtungsstrahl des Lichtbündels parallel zu der Wand verläuft. Unter einer kippstabilen Anlage wird in diesem Zusammenhang eine Anlage an wenigstens drei auf einer Ebene liegenden Kontaktbereichen verstanden. Als Richtungsstrahl wird die Abstrahlrichtung des Lichtbündels bezeichnet. Durch eine derartige Ausgestaltung der seitlichen Längsseiten ist es möglich, die Kontrollleuchte kippstabil an eine Wand anzulegen und dabei eine für die Erkennung von Unebenheiten optimale Ausleuchtung der Wand zu erzielen.

Das Gehäuse der Kontrollleuchte weist eine im Wesentlichen quaderförmige, längliche Grundgestalt auf. Die Tiefe des Gehäuses ist geringer als die Breite des Gehäuses. Insbesondere erfolgt die Abstrahlung des Lichts parallel zur kürzesten Kante. Eine derart ausgestaltete Kontrollleuchte ist besonders gut handhabbar; insbesondere kann eine solche Kontrollleuchte zur Begutachtung einer Wand hochkant an die Wand angelegt werden.

Vorteilhafte Weiterbildungen sind Gegenstand der Unteransprüche.

Vorzugsweise weist das Gehäuse an seiner Vorderseite eine längliche Lichtaustrittsöffnung auf. Die Lichtaustrittsöffnung erstreckt sich in der Längsrichtung und ist insbesondere rechteckig ausgestaltet. Beispielsweise wird die Lichtaustrittsöffnung durch ein Fenster aus transparentem Material gebildet. Zweckmäßigerweise ist die Kollimatoroptik derart angeordnet, dass das Lichtbündel aus der Lichtaustrittsöffnung in einer zur Vorderseite normalen Abstrahlrichtung abgestrahlt wird. Die Abstrahlrichtung ist dabei insbesondere die Richtung des Richtungsstrahls des Lichtbündels.

Gemäß einer bevorzugten Ausgestaltung weist das Lichtbündel in der Querrichtung einen Öffnungswinkel von 6 bis 12 Grad, vorzugsweise von 7 bis 11 Grad, insbesondere von 9 Grad auf. Es hat sich herausgestellt, dass sich ein Lichtbündel mit einem Öffnungswinkel von ungefähr 9 Grad besonders gut dafür eignet, Oberflächenstrukturen zu kontrollieren bzw. Wandunebenheiten sichtbar zu machen.

Zweckmäßigerweise weist die LED-Anordnung eine Vielzahl von LEDs auf, die auf einer in der Längsrichtung verlaufenden, gedachten Gerade angeordnet sind. Insbesondere sind die LEDs gleichmäßig über die Länge der Kollimatoroptik verteilt, so dass sich in Längsrichtung eine gleichmäßige Lichtverteilung ergibt.

Gemäß einer bevorzugten Ausgestaltung sind die Kollimatoroptik und die Lichtaustrittsöffnung mindestens halb so lang, vorzugsweise mehr als 2/3 so lang wie das Gehäuse. Die Kollimatoroptik und die Lichtaustrittsöffnung nehmen somit einen signifikanten Teil der Länge des Gehäuses ein. Die Länge des Gehäuses wird effizient zur Erzeugung eines länglichen Lichtbündels genutzt.

Vorzugsweise ist die Außenkontur des Querschnitts des Gehäuses in Längsrichtung im Wesentlichen konstant. Die Kontrollleuchte kann entlang ihrer Längsachse überall in gleicher Weise ergriffen werden und ist dadurch besonders gut handhabbar. Der genannte Querschnitt ist ein Querschnitt senkrecht zur Längsrichtung.

Zweckmäßigerweise umfasst die Kontrollleuchte eine Kabelaufnahmerinne, die umfangsseitig an dem Gehäuse vorgesehen ist und zur Aufnahme eines Netzkabels der Kontrollleuchte dient. Zweckmäßigerweise verläuft die Kabelaufnahmerinne rings um das Gehäuse herum. Insbesondere liegt die Kabelaufnahmerinne in einer zur Längsrichtung und/oder Querrichtung parallelen Ebene. Die Kabelaufnahmerinne ist an den Umfangsseiten des Gehäuses ausgebildet. Als Umfangsseiten sollen insbesondere die parallel zum Richtungsstrahl des Lichtbündels ausgerichteten Seiten des Gehäuses bezeichnet werden. Insbesondere handelt es sich bei diesen Seiten um die vier flächenmäßig kleinsten Seiten des im Wesentlichen quaderförmigen Gehäuses. Das Netzkabel der Kontrollleuchte kann in der Kabelaufnahmerinne geführt umfangsseitig um die Kontrollleuchte aufgewickelt werden. Das Netzkabel kann folglich in einer sehr praktischen und einfachen Weise verstaut werden, ohne dabei die Funktion der Kontrollleuchte zu beeinträchtigen.

Vorzugsweise sind an Stirnseiten des Gehäuses jeweils zwei einander zugewandte L-förmige Kabelhalteelemente angeordnet. Durch die Kabelhalteelemente kann das Aufwickeln des Netzkabels weiter erleichtert werden.

Vorzugsweise verfügt die Kollimatoroptik über einen Zentralabschnitt und zwei in Querrichtung beidseitig an dem Zentralabschnitt angeordnete Schenkelabschnitte, wobei sich der Zentralabschnitt und die Schenkelabschnitte in Längsrichtung erstrecken. Insbesondere dienen die Schenkelabschnitte der Bündelung des von den LEDs emittierten Lichts und der Fixierung der Kollimatoroptik im Gehäuse. Die Schenkelabschnitte erfüllen somit eine Doppelfunktion. Die Bündelung des Lichts erfolgt dabei vorzugsweise durch Brechung beim Eintritt und Austritt in/aus der Kollimatoroptik und durch eine Reflexion an einer gewölbten Reflexionsfläche. Gemäß einer bevorzugten Ausgestaltung trägt der Zentralabschnitt auch zur Bündelung des Lichts bei. Beispielsweise ist der Zentralabschnitt als Sammellinse ausgebildet.

Zweckmäßigerweise sind im Innern des Gehäuses 1 Rastarme vorgesehen, die orthogonal zur Längs- und Querrichtung ausgerichtet sind und in Eingriff mit den Schenkelabschnitten stehen. Mittels der Rastarme kann die Kollimatoroptik in einfacher und praktischer Weise im Gehäuse fixiert werden.

Ferner wird ein Verfahren zur Kontrolle von Oberflächenstrukturen bereitgestellt, umfassend die Schritte: Positionieren einer Kontrollleuchte gemäß einer der vorstehend beschriebenen Ausgestaltungen an einer zu prüfenden Wandoberfläche, so dass eine seitliche Längsseite der Kontrollleuchte an der Wandoberfläche anliegt und Ausleuchten der Wandoberflächte mit der Kontrollleuchte, wobei der Richtungsstrahl des von der Kontrollleuchte erzeugten Lichtbündels im Wesentlichen parallel zu der Wandoberfläche verläuft.

Bei der Wandoberfläche handelt es sich vorzugsweise um die Wandoberfläche eines Gebäudes; beispielsweise um eine verputzte Wandoberfläche.

Beispielhafte Ausführungsformen der Erfindung werden nachfolgend unter Bezugnahme auf die Zeichnung erläutert. Dabei zeigt
- Figur 1: eine perspektivische Darstellung einer Kontrollleuchte;
- Figur 2: eine Explosionsdarstellung der Kontrollleuchte;
- Figur 3: einen Querschnitt der Kontrollleuchte;

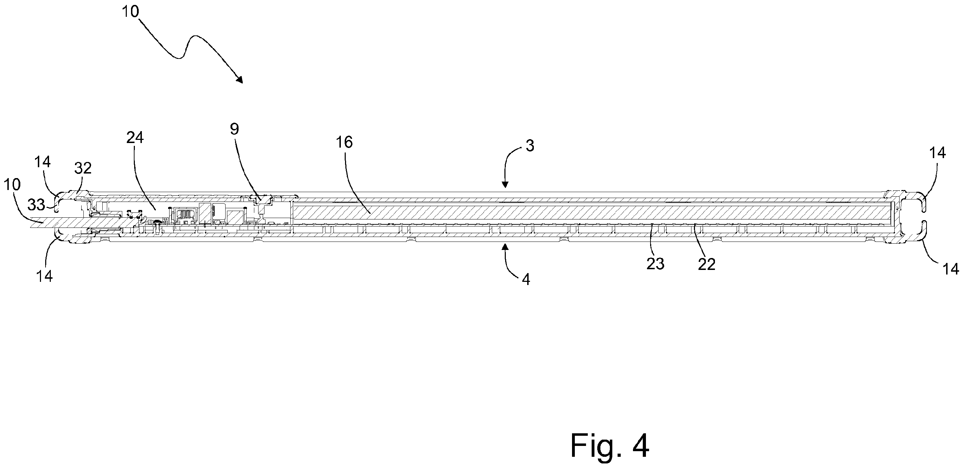

- Figur 4: einen Längsschnitt der Kontrollleuchte
- Figur 5: einen Aufbau aus einem Stativ und einer Kontrollleuchte.

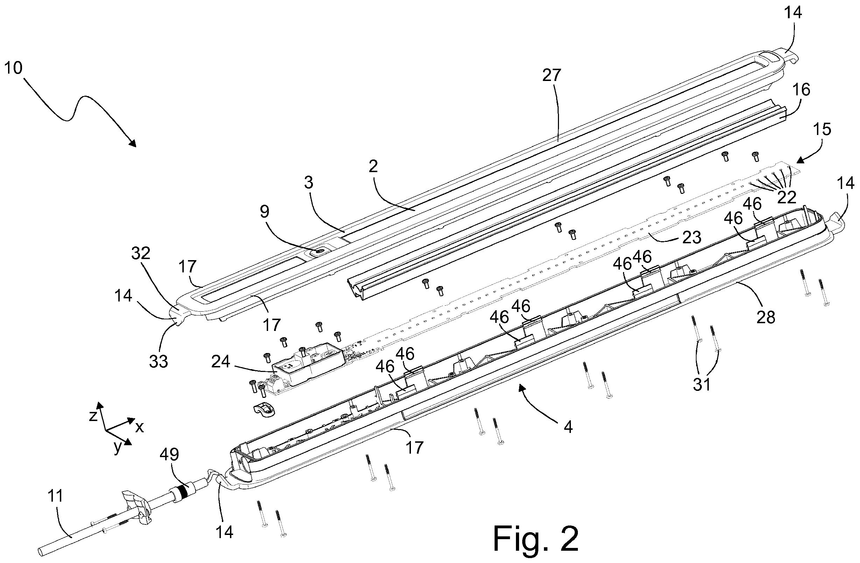

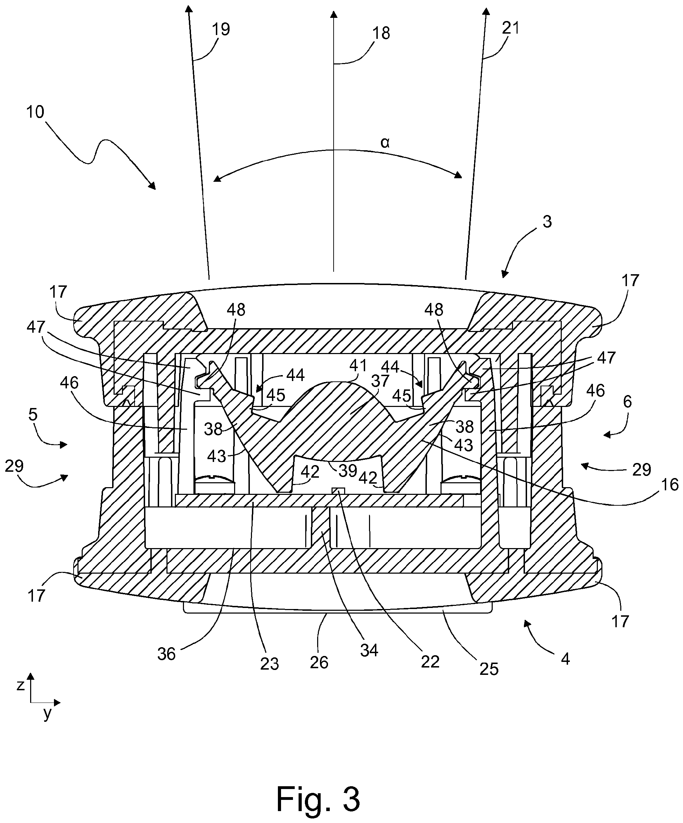

Die als Handleuchte ausgeführte Kontrollleuchte 10 weist ein Gehäuse 1 auf, das sich in einer Längsrichtung x erstreckt. Die Kontrollleuchte 10 verfügt über eine gedachte Längsachse und erstreckt sich in Achsrichtung dieser Längsachse. Die Kontrollleuchte 10 dient der Kontrolle von Oberflächenstrukturen. Das Gehäuse 1 ist länglich ausgebildet. Wie in der Figur 2 zu sehen, sind im Gehäuse 1 eine LED-Anordnung 15 und eine sich in der Längsrichtung erstreckende, längliche Kollimatoroptik 16 angeordnet. Die Kollimatoroptik 16 ist ausgebildet, von der LED-Anordnung 15 emittiertes Licht zu einem sich in der Längsrichtung x erstreckenden Lichtbündel zu bündeln. Der Öffnungswinkel α des erzeugten Lichtbündels ist in der Figur 3 angedeutet. Der Öffnungswinkel α in der zur Längsrichtung x orthogonalen Querrichtung y beträgt weniger als 20 Grad.

Mit einer derart ausgestalteten Kontrollleuchte 10 wird es möglich, in besonders einfacher und praktischer Weise Oberflächenstrukturen zu kontrollieren bzw. die Ebenheit einer Wandoberfläche zu begutachten. Durch die Ausführung als Handleuchte kann die Kontrollleuchte einfach und schnell umpositioniert werden. Aufgrund der länglichen Ausgestaltung und der Bereitstellung eines länglichen Lichtbündels kann ein großer Flächenbereich ausgeleuchtet werden. Durch den geringen Öffnungswinkel α des Lichtbündels können Wandunebenheiten besonders gut sichtbar gemacht werden.

Nachstehend werden exemplarische Ausgestaltungen und Anwendungen der Kontrollleuchte 10 im Detail erläutert.

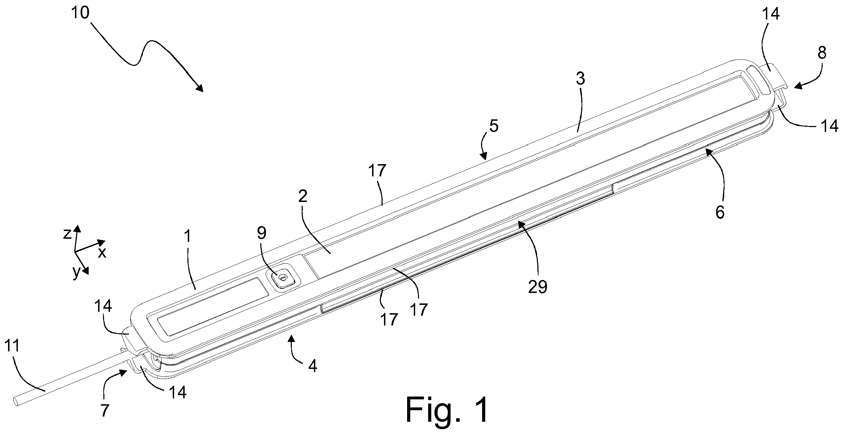

Wie in der Figur 1 gezeigt, weist das Gehäuse 1 eine im Wesentlichen quaderförmige Grundgestalt auf und verfügt über vier Längsseiten - nämlich eine Vorderseite 3, eine parallel zur Vorderseite 3 verlaufende Rückseite 4 und zwei parallel zueinander angeordnete, sich in Längsrichtung x erstreckende seitliche Längsseiten 5 und 6. Die seitlichen Längsseiten 5 und 6 sind senkrecht zur Vorderseite 3 und Rückseite 4 angeordnet. Das Gehäuse 1 verfügt ferner über zwei parallel zueinander angeordnete, sich in Querrichtung y erstreckende Stirnseiten 7 und 8. Die seitlichen Längsseiten 5 und 6 und die Stirnseiten 7 und 8 werden auch als Umfangsseiten bezeichnet. Das Gehäuse 1 ist weniger tief als breit. Die Außenkontur des Querschnitts des Gehäuses 1 ist in Längsrichtung x im Wesentlichen konstant. Die Längsrichtung des Gehäuses 1 wird auch als x-Richtung, die Breitenrichtung als y-Richtung und die Tiefenrichtung als z-Richtung bezeichnet. Die x-Richtung, die y-Richtung und die z-Richtung sind orthogonal zueinander ausgerichtet. Die Vorderseite 3 und die Rückseite 4 liegen in x-y-Ebenen, die seitlichen Längsseiten 5 und 6 liegen in x-z-Ebenen und die Stirnseiten 7, 8 liegen in y-z-Ebenen.

Die seitlichen Längsseiten 5, 6 sind derart ausgestaltet, dass bei kippstabiler Anlage der seitlichen Längsseiten 5, 6 an einer im Wesentlichen ebenen Wand ein Richtungsstrahl 18 des von der Kontrollleuchte 10 erzeugten Lichtbündels parallel zur Wand verläuft. Im gezeigten Beispiel wird eine derartige Anlage dadurch ermöglicht, dass auf jeder der seitlichen Längsseiten 5, 6 zwei in Querrichtung von dem Gehäuse 1 wegragende, parallel zueinander verlaufende, längliche Gehäusevorsprünge 17 vorgesehen sind, mit denen sich die Kontrollleuchte 10 bei der Anlage an der Wand abstützt. Die Gehäusevorsprünge 17 sind z.B. in der Figur 3 zu sehen. Alternativ zu dem gezeigten Ausführungsbeispiel können die seitlichen Längsseiten 5, 6 auch anders ausgestaltet sein, um zu gewährleisten, dass die Kontrollleuchte 10 senkrecht an eine Wand angelegt werden kann. Beispielsweise können die seitlichen Längsseiten 5, 6 auch eben ausgestaltet sein.

Wie in der Figur 3 zu sehen, ist die Vorderseite 3 in Bezug auf die y-Richtung konvex ausgestaltet; d.h. die Vorderseite 3 verfügt über eine sich in z-Richtung erhebende Wölbung. Wird die Kontrollleuchte 10 mit ihrer Vorderseite 3 nach unten auf eine ebene Unterlage abgelegt, so bleibt aufgrund der Wölbung ein Spalt zwischen der Vorderseite 3 und der Unterlage, aus dem im eingeschalteten Zustand der Kontrollleuchte 10 Licht austritt. Folglich kann schnell und einfach erkannt werden, ob die abgelegte Kontrollleuchte 10 noch eingeschaltet ist, selbst wenn die Kontrollleuchte 10 mit ihrer Vorderseite 3 nach unten abgelegt wurde.

An der Rückseite 4 ist ebenfalls eine konvexe Wölbung vorgesehen. Die Rückseite 4 verfügt darüber hinaus über ein Sockelelement 25, das eine ebene, senkrecht zur z-Richtung ausgerichtete Auflagefläche 26 aufweist, so dass die Kontrollleuchte 10 mit ihrer Rückseite 4 kippstabil auf eine ebene Unterlage abgelegt werden kann. Alternativ zu dieser Ausgestaltung kann die Rückseite 4 auch eben ausgestaltet sein. In diesem Fall wird das Sockelelement 25 nicht benötigt.

Die Kontrollleuchte 10 kann auf drei Seiten - nämlich den beiden seitlichen Längsseiten 5, 6 und der Rückseite 4 - kippstabil abgelegt werden.

Die Kontrollleuchte 10 verfügt über eine Kabelaufnahmerinne 29, die umfangsseitig an dem Gehäuse 1 vorgesehen ist. Die Kabelaufnahmerinne 29 dient der Aufnahme eines an der Stirnseite 7 aus dem Gehäuse 1 herausgeführten Netzkabels 11. Die Kabelaufnahmerinne 29 verläuft rings um das Gehäuse 1 herum. Die Kabelaufnahmerinne 29 liegt in einer x-y-Ebene und somit senkrecht zur Abstrahlungsrichtung des erzeugten Lichtbündels.

Die Kabelaufnahmerinne 29 wird in z-Richtung durch die bereits vorstehend genannten Gehäusevorsprünge 17 begrenzt, wie dies z.B. in der Figur 3 zu sehen ist. Wie in den Figuren 1 und 2 gezeigt, sind die Gehäusevorsprünge 17 entlang des gesamten Umfangs - also auch an den Stirnseiten 7 und 8 - vorgesehen. Als Umfang wird in diesem Zusammenhang ein Umfang um die z-Richtung bezeichnet. Die Gehäusevorsprünge 17 sind als umlaufende Bünde ausgestaltet. Die Gehäusevorsprünge 17 umlaufen die Vorderseite 3 bzw. Rückseite 4 in der Form eines Rechtecks mit abgerundeten Ecken. An den seitlichen Längsseiten 5 und 6 ragen die Gehäusevorsprünge 17 jeweils ausgehend von der Vorderseite 3 und der Rückseite 4 in Querrichtung y nach außen. An den Stirnseiten 7 und 8 ragen die Gehäusevorsprünge 17 jeweils ausgehend von der Vorderseite 3 und der Rückseite 4 in Längsrichtung x nach außen. Die Gehäusevorsprünge 17 ragen in Längs- und Querrichtung x, y über die Umfangsseiten hinaus.

Im gezeigten Ausführungsbeispiel wird die Kabelaufnahmerinne 29 nicht nur durch die genannten Gehäusevorsprünge 17 gebildet, sondern auch dadurch, dass sowohl die seitlichen Längsseiten 5 und 6 als auch die Stirnseiten 7 und 8 konkav ausgestaltet sind. Die seitlichen Längsseiten 5 und 6 wölben sich in y-Richtung nach innen und die Stirnseiten 7 und 8 wölben sich in x-Richtung nach innen. Alternativ zu dem gezeigten Ausführungsbeispiel ist es auch möglich, die Kalbeaufnahmerinne 29 entweder nur durch die Gehäusevorsprünge 17 oder die konkave Ausgestaltung der seitlichen Längsseite 5, 6 und Stirnseiten 7, 8 zu erzielen.

Um das Aufwickeln des Netzkabels 11 weiter zu erleichtern, verfügt die Kontrollleuchte 10 über L-förmige Kabelhalteelemente 14. An jeder der Stirnseiten 7, 8 sind jeweils zwei einander zugewandte Kabelhalteelemente 14 angeordnet. Jedes der Kabelhalteelemente 14 verfügt über einen von der jeweiligen Stirnseite 7, 8 abstehenden, sich in Längsrichtung x erstreckenden ersten Schenkel 32, an den sich ein hin zu dem jeweils anderen Kabelhalteelement 14 in z-Richtung erstreckender zweiter Schenkel 33 anschließt. Zwischen den zweiten Schenkeln 33 einer Stirnseite 7, 8 befindet sich jeweils eine Lücke, durch die das Netzkabel 11 beim Aufwickeln eingeführt werden kann. Vorzugsweise ist die Lücke etwas kleiner als der Durchmesser des Netzkabels 11 dimensioniert, so dass dieses nur unter elastischer Verformung durchdrückbar ist.

Wie in der Figur 2 zu sehen, ist das Gehäuse 1 exemplarisch in einen vorderen Schalenteil 27 und einen hinteren Schalenteil 28 unterteilt. An dem vorderen Schaltenteil 27 befindet sich die Vorderseite 3 und an dem hinteren Schaltenteil die Rückseite 4. Die Fügeebene zwischen den beiden Schaltenteilen 27, 28 ist eine x-y-Ebene, die durch die Umfangsseiten - also die seitlichen Längsseiten 5, 6 und die Stirnseiten 7, 8 - verläuft. Exemplarisch werden die Umfangsseiten von der Fügeebene in z-Richtung in einem Verhältnis von ungefähr eins zu zwei unterteilt. Die dem hinteren Schalenteil 28 zugehörigen Umfangsseiten sind ungefähr doppelt so tief wie die dem vorderen Schalenteil 27 zugehörigen Umfangsseiten. Die Schalenteile 27 und 28 sind durch Befestigungsmittel - hier exemplarisch eine Vielzahl von Schrauben 31 - aneinander befestigt. Die Schrauben 31 sind in Durchgangslöcher eingesetzt, die sich exemplarisch an der Rückseite 4 befinden.

An der Vorderseite 3 ist die exemplarisch rechteckig ausgebildete, längliche Lichtaustrittsöffnung 2 vorhanden, aus der das von der Kontrollleuchte 10 erzeugte Lichtbündel ausgestrahlt wird. Die Lichtaustrittsöffnung 2 liegt in einer x-y-Ebene. Der Richtungsstrahl 18 verläuft senkrecht zu der Vorderseite 3, wie dies in der Figur 3 gezeigt ist. Exemplarisch wird die Lichtaustrittsöffnung 2 durch ein Fenster aus einem transparenten Material, beispielsweise Kunststoff, gebildet. Die Lichtaustrittsöffnung 2 nimmt einen signifikanten Teil, beispielsweise mehr als 2/3, der Länge des Gehäuses 1 ein.

Im Innern des Gehäuses 1 ist die LED-Anordnung 15 vorgesehen. Die LED-Anordnung 15 umfasst eine Vielzahl von LEDs 22. Zum Zwecke der besseren Übersichtlichkeit sind in der Figur 2 nur die hinteren sechs LEDs mit dem Bezugszeichen 22 versehen. Die LEDs 22 sind in gleichmäßigen Abständen angeordnet und befinden sich auf einer in Längsrichtung x verlaufenden, gedachten Gerade. Die LEDs geben vorzugsweise Licht mit einer Farbtemperatur von 5000 K +/- 500 K ab.

Die LEDs 22 sind auf einer Leiterplatte 23 befestigt, die im Innern des Gehäuses 1 angeordnet ist. Die Leiterplatte 23 erstreckt sich nahezu über die gesamte Länge des Gehäuses 1. Der Bereich der Leiterplatte, auf dem sich die LEDs 22 befinden, wird auch als LED-Abschnitt bezeichnet. Die Leiterplatte 23 verfügt zudem über einen Ansteuerungsabschnitt 24, auf dem die für die Ansteuerung der LEDs 22 benötigte Elektronik angeordnet ist. Der Ansteuerungsabschnitt 24 und der LED-Abschnitt sind in Längsrichtung x hintereinander angeordnet.

Die Leiterplatte 23 ist senkrecht zur z-Richtung ausgerichtet und auf einer Rippenstruktur 34 angeordnet, die von einer inneren Rückseite 36 des Gehäuses 1 in z-Richtung nach innen ragt. Auf diese Weise wird die Unterseite der Leiterplatte 23 von der inneren Rückseite 36 beabstandet, was von Vorteil ist, da so Platz für eventuell unten aus der Leiterplatte 23 herausragende Verdrahtungselemente vorhanden ist. Ferner wird durch die Rippenstruktur 34 eine zusätzliche Versteifung des Gehäuses 1 erzielt.

Auf die Leiterplatte 23 ist die Kollimatoroptik 16 aufgesetzt. Die Kollimatoroptik 16 ist ausgebildet, das von den LEDs 22 emittierte Licht zu einem langen, schmalen Lichtbündel zu bündeln. Die Kollimatoroptik 16 besteht aus transparentem Material, beispielsweise Kunststoff, und ist im Wesentlichen stabförmig bzw. strangförmig ausgebildet. Die Kollimatoroptik 16 erstreckt sich entlang der Längsrichtung x. Der Querschnitt der Kollimatoroptik 16 ist entlang der Längsrichtung x konstant. Die optische Achse der Kollimatoroptik 16 verläuft parallel zur z-Richtung.

Die Kollimatoroptik 16 verfügt über einen Zentralabschnitt 37 und zwei beidseitig an dem Zentralabschnitt 37 angeordnete Schenkelabschnitte 38. Der Zentralabschnitt 37 und die Schenkelabschnitte 38 erstrecken sich in Längsrichtung x. Die Schenkelabschnitte 38 öffnen sich in Richtung hin zu der Vorderseite 3 bzw. der Lichtaustrittsöffnung 2 und laufen in Richtung hin zu der Rückseite 4 aufeinander zu. Die Schenkelabschnitte 38 weisen die Grundgestalt horizontal bzw. in y-Richtung voneinander beabstandeter Schenkel eines in z-Richtung ausgerichteten Buchstaben "V" auf.

Der Zentralabschnitt 37 ist im Wesentlichen zylindrisch ausgebildet und weist zwei einander abgewandte konvexe Flächen auf - eine Zentral-Lichteintrittsfläche 39 und eine Zentral-Lichtaustrittsfläche 41. Die optische Achse der Zentral-Lichteintrittsfläche 39 und der Zentral-Lichtaustrittsfläche 41 verläuft parallel zur z-Richtung. Die Zentral-Lichteintrittsfläche 39 und die Zentral-Lichtaustrittsfläche 41 sind derart ausgestaltet und zueinander angeordnet, dass von den LEDs 22 ausgestrahltes Licht über die Zentral-Lichteintrittsfläche 39 in den Zentralabschnitt 37 eintritt und über die Zentral-Lichtaustrittsfläche 41 aus dem Zentralabschnitt 37 austritt. Der Zentralabschnitt 37 wirkt wie eine Sammellinse. Das von den LEDs 22 emittierte Licht wird an beiden konvexen Flächen 39, 41 zur optischen Achse hin gebrochen und damit eng gebündelt. Die Zentral-Lichtaustrittsfläche 41 hat dabei eine asphärische Form und folglich keinen konstanten Radius.

Jeder der Schenkelabschnitte 38 verfügt über eine Schenkel-Lichteintrittsfläche 42. Die beiden Schenkel-Lichteintrittsflächen 42 sind einander zugewandt. Die Lichteintrittsflächen 42 sind nahezu parallel zur z-Richtung ausgerichtet und planar geformt. Die Schenkel-Lichteintrittsflächen 42, die Zentral-Lichteintrittsfläche 39 und die Leiterplatte 23 begrenzen zusammen einen Hohlraum, in dem die LEDs 22 untergebracht sind. Die Schenkel-Lichteintrittsflächen 42 begrenzen den Hohlraum dabei in y-Richtung, und die Zentral-Lichteintrittsfläche 39 und die Leiterplatte 23 begrenzen den Hohlraum in z-Richtung.

Die Schenkelabschnitte 38 verfügen über Reflexionsflächen 43, die die seitlichen Außenflächen der Kollimatoroptik 16 darstellen. Die Reflexionsflächen 43 sind den Schenkel-Lichteintrittsflächen 42 jeweils abgewandt. Die Reflexionsflächen 43 sind konvex geformt und in y-Richtung nach außen gewölbt. Die Schenkelabschnitte 38 verfügen an ihren Innenseiten über Schenkel-Lichtaustrittsflächen 44. Diese sind den Reflexionsflächen 43 abgewandt. Die Schenkel-Lichteintrittsflächen, Reflexionsflächen 43 und Schenkel-Lichtaustrittsflächen sind derart ausgestaltet und angeordnet, dass von den LEDs 22 seitlich bzw. in y-Richtung abgestrahltes Licht über die Schenkel-Lichteintrittsflächen in die Schenkelabschnitte 38 eintritt, innen an den Reflexionsflächen 43 einmal reflektiert wird und dann aus den Schenkel-Lichtaustrittsflächen 44 austritt. Das Licht wird dabei zuerst an den Schenkel-Lichteintrittsflächen gebrochen und dann an den Reflexionsflächen 43 durch das Prinzip der Totalreflexion umgelenkt. Schließlich tritt das Licht bei Brechung an den Schenkel-Lichtaustrittsflächen 44 nahezu parallel zur optischen Achse aus.

An den Schenkel-Lichtaustrittsflächen 44 ist jeweils eine in Längsrichtung x verlaufende Stufe 45 vorgesehen. Durch die Stufe 45 können die Schenkelabschnitte 38 in y-Richtung kürzer ausgeführt sein, ohne die durch die Kollimatoroptik 16 zu erzielende Lichtbündelung stark zu beeinträchtigen.

In der Figur 3 wird das von der Kollimatoroptik 16 erzeugte Lichtbündel durch den Richtungsstrahl 18 und die Randstrahlen 19 und 21 angedeutet. Zwischen den Randstrahlen 19 und 21 ergibt sich ein Öffnungswinkel von exemplarisch 9 Grad. Der Öffnungswinkel orthogonal dazu - also in Längsrichtung x - beträgt vorzugsweise zwischen 46 und 66 Grad, insbesondere 56 Grad.

Die Kollimatoroptik wird durch Rastarme 46 im Gehäuse 1 fixiert. Die Rastarme 46 erstrecken sich im Innern des Gehäuses 1 von der inneren Rückseite 36 in z-Richtung. Die Rastarme 46 sind jeweils im Bereich der inneren seitlichen Längsseiten vorgesehen. Die Rastarme 46 sind in Längsrichtung x gleichmäßig verteilt angeordnet. An dem distalen Ende jedes Rastarms 46 sind zwei in Querrichtung y nach innen ragende Rastvorsprünge 47 vorgesehen. Zwischen diese Rastvorsprünge 47 greift ein an jedem Schenkelabschnitt 37 der Kollimatoroptik 16 vorgesehener Schenkelvorsprung 48. Die Schenkelvorsprünge 48 ragen jeweils in y-Richtung von den distalen Enden der Schenkelabschnitte 38 nach außen weg.

Das Gehäuse 1 ist vorzugsweise aus einer Hartkomponente gefertigt, die mit einer Weichkomponente umspritzt ist. Vorzugsweise ist die Hartkomponente transparent und die Lichtaustrittsöffnung 2 wird dadurch bereitgestellt, dass im Bereich der Lichtaustrittsöffnung 2 keine Umspritzung mit der Weichkomponente erfolgt. Vorzugsweise dient die Weichkomponente auch als Dichtlippe zwischen den beiden Schalenteilen 27, 28 sowie als Abdichtung an den vorstehend genannten Durchgangslöcher für die Schrauben 31. Zweckmäßigerweise dient die Weichkomponente auch als Abdichtung für den Einschaltknopf 9, der exemplarisch an der Vorderseite 3 vorgesehen und in einer Vertiefung angeordnet ist.

Wie vorstehend bereits erwähnt, wird das Netzkabel 11 an einer der Stirnseiten 7, 8 aus dem Gehäuse 1 herausgeführt. Zur Abdichtung der dafür vorhandenen Öffnung ist die in der Figur 2 gezeigte Tülle 49 vorgesehen, die in einen Konus gezogen und auf das Netzkabel 11 aufgesetzt ist.

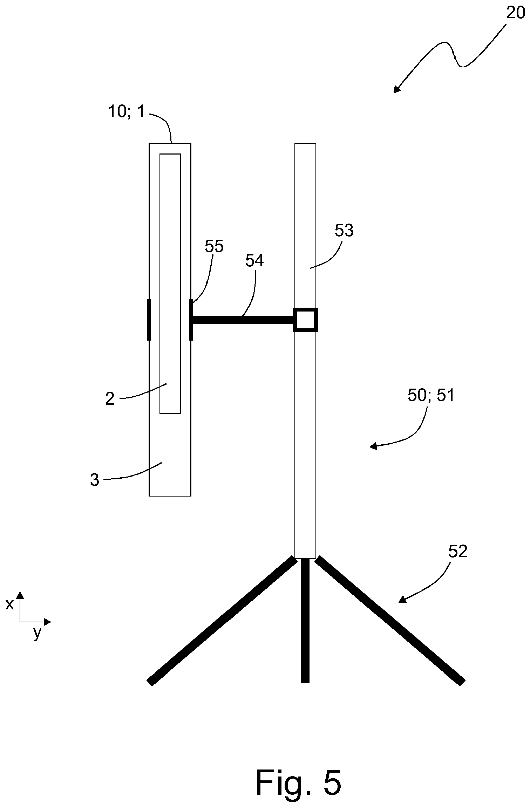

Die Figur 5 zeigt eine Ausleuchtungsvorrichtung 20 aus einem Stativ 50 und der Kontrollleuchte 10. Das Stativ 50 verfügt über eine auf einer Unterlage abstellbare Basis 51, die exemplarisch als Beinanordnung 52 mit daran befestigtem Vertikalträger 53 ausgebildet ist. Das Stativ 50 verfügt ferner über einen Horizontalausleger 54. Der Horizontalausleger 54 ist an der Basis 51 befestigt. Der Horizontalausleger 54 ist horizontal ausgerichtet und verläuft parallel zu der Unterlage, auf der das Stativ 50 abgestellt ist. Exemplarisch ist der Horizontalausleger 54 höhenverstellbar an dem Vertikalträger 53 angebracht. An dem Horizontalausleger 54 ist wiederum die Kontrollleuchte 10 angebracht und zwar mit ihrer Längsachse in vertikaler Ausrichtung - d.h. senkrecht zu der Unterlage, auf der das Stativ abgestellt ist. Die Kontrollleuchte 10 kann beispielsweise mittels eines an dem distalen Ende des Horizontalauslegers 54 vorgesehenen Greifabschnitts 55 fixiert sein. Die Kontrollleuchte 10 ist derart ausgerichtet, dass das von der Kollimatoroptik 16 erzeugte Lichtbündel senkrecht zum Horizontalausleger 54 abgestrahlt wird.

Der Vorteil der beschriebenen Ausleuchtungsvorrichtung 20 besteht insbesondere darin, dass die Kontrollleuchte 10 mit Hilfe des Horizontalauslegers 54 direkt an eine zu begutachtende Wand positioniert werden kann.

## Patentansprüche

1. Kontrollleuchte (10) zur Kontrolle von Oberflächenstrukturen, mit einem sich in einer Längsrichtung (x) erstreckenden, länglichen Gehäuse (1), in dem eine LED-Anordnung (15) und eine sich in der Längsrichtung (x) erstreckende, längliche Kollimatoroptik (16) angeordnet sind, wobei die Kollimatoroptik (16) ausgebildet ist, von der LED-Anordnung (15) emittiertes Licht zu einem sich in der Längsrichtung (x) erstreckenden Lichtbündel zu bündeln, dessen Öffnungswinkel (α) in einer zur Längsrichtung (x) orthogonalen Breitenrichtung (y) weniger als 20 Grad beträgt, **dadurch gekennzeichnet, dass** die Kontrollleuchte (10) als frei bewegbare und positionierbare Handleuchte ausgeführt ist, wobei das Gehäuse (1) über senkrecht zur Breitenrichtung (y) verlaufende seitliche Längsseiten (5, 6) verfügt, die derart ausgestaltet sind, dass bei kippstabiler Anlage der seitlichen Längsseiten (5, 6) an einer im Wesentlichen ebenen Wand der Richtungsstrahl (18) des Lichtbündels parallel zu der Wand verläuft, wobei das Gehäuse (1) eine im Wesentlichen quaderförmige, längliche Grundgestalt aufweist, deren Tiefe geringer ist als ihre Breite.

2. Kontrollleuchte (10) nach einem der voranstehenden Ansprüche, **dadurch gekennzeichnet, dass** das Gehäuse (1) an einer Vorderseite (3) eine sich in der Längsrichtung (x) erstreckende, längliche Lichtaustrittsöffnung (2) aufweist und die Kollimatoroptik derart angeordnet ist, dass der Richtungsstrahl (18) des Lichtbündels senkrecht zur Vorderseite (3) verläuft.

3. Kontrollleuchte (10) nach einem der voranstehenden Ansprüche, **dadurch gekennzeichnet, dass** das Lichtbündel in der Breitenrichtung (y) einen Öffnungswinkel von 6 bis 12 Grad, vorzugsweise von 7 bis 11 Grad, insbesondere von 9 Grad aufweist.

4. Kontrollleuchte (10) nach einem der voranstehenden Ansprüche, **dadurch gekennzeichnet, dass** die LED-Anordnung (15) eine Vielzahl von LEDs (22) aufweist, die auf einer in der Längsrichtung (x) verlaufenden, gedachten Geraden angeordnet sind.

5. Kontrollleuchte (10) nach Anspruch 2, **dadurch gekennzeichnet, dass** die Kollimatoroptik (16) und die Lichtaustrittsöffnung (2) mindestens halb so lang, vorzugsweise mehr als 2/3 so lang wie das Gehäuse (1) sind.

6. Kontrollleuchte (10) nach einem der voranstehenden Ansprüche, **dadurch gekennzeichnet, dass** die Außenkontur des Querschnitt des Gehäuses (1) in Längsrichtung (x) im Wesentlichen konstant ist.

7. Kontrollleuchte (10) nach einem der voranstehenden Ansprüche, **gekennzeichnet durch** eine Kabelaufnahmerinne (29), die umfangsseitig an dem Gehäuse (1) vorgesehen ist und zur Aufnahme eines Netzkabels (11) der Kontrollleuchte (10) dient, wobei die Kabelaufnahmerinne zweckmäßigerweise rings um das Gehäuse herum verläuft.

8. Kontrollleuchte (10) nach einem der voranstehenden Ansprüche, **dadurch gekennzeichnet, dass** an Stirnseiten (7, 8) des Gehäuses (1) jeweils zwei einander zugewandte L-förmige Kabelhalteelemente (14) angeordnet sind.

9. Kontrollleuchte (10) nach einem der voranstehenden Ansprüche, **dadurch gekennzeichnet, dass** die Kollimatoroptik (16) über einen Zentralabschnitt (37) und zwei in Querrichtung beidseitig an dem Zentralabschnitt (37) angeordnete Schenkelabschnitte (38) verfügt, wobei sich der Zentralabschnitt (37) und die Schenkelabschnitte (38) in Längsrichtung (x) erstrecken.

10. Kontrollleuchte nach Anspruch 9, **dadurch gekennzeichnet, dass** die Schenkelabschnitte (18) der Bündelung des von den LEDs (22) emittierten Lichts und der Fixierung der Kollimatoroptik (16) im Gehäuse (1) dienen.

11. Kontrollleuchte nach Anspruch 10, **dadurch gekennzeichnet, dass** im Innern des Gehäuses (1) Rastarme (46) vorgesehen sind, die orthogonal zur Längs- und Querrichtung (x, y) ausgerichtet sind und in Eingriff mit den Schenkelabschnitten (18) stehen.

12. Verfahren zur Kontrolle von Oberflächenstrukturen, umfassend die Schritte: Positionieren einer Kontrollleuchte (10) gemäß einem der Ansprüche 1 bis 11 an einer zu prüfenden Wandoberfläche, so dass eine seitliche Längsseite (5, 6) der Kontrollleuchte (10) an der Wandoberfläche anliegt und Ausleuchten der Wandoberflächte mit der Kontrollleuchte (10), wobei der Richtungsstrahl (18) des von der Kontrollleuchte (10) erzeugten Lichtbündels im Wesentlichen parallel zu der Wandoberfläche verläuft.

## Claims

1. Inspection lamp (10) for inspecting surface structures, having an elongate housing (1) which extends in a longitudinal direction (x) and in which an LED arrangement (15) and elongate collimator optics (16) which extend in the longitudinal direction (x) are arranged, wherein the collimator optics (16) are adapted to bundle light emitted from the LED arrangement (15) into a light bundle extending in the longitudinal direction (x) whose aperture angle (α) in a width direction (y) orthogonal to the longitudinal direction (x) is less than 20 degrees, **characterized in that** the inspection lamp (10) is designed as a freely movable and positionable hand lamp, wherein the housing (1) has lateral longitudinal sides (5, 6) which run perpendicularly to the width direction (y) and are adapted such that the directional beam (18) of the light bundle runs parallel to the wall when the lateral longitudinal sides (5, 6) rest against a substantially flat wall in a tilting-stable manner, the housing (1) having a substantially cuboid, elongated basic shape, the depth of which is less than its width.

2. Inspection lamp (10) according to one of the preceding claims, **characterized in that** the housing (1) has on a front side (3) an elongate light output opening (2) extending in the longitudinal direction (x) and the collimator optics are arranged in such a way that the directional beam (18) of the light bundle runs perpendicularly to the front side (3).

3. Inspection lamp (10) according to one of the preceding claims, **characterized in that** the light bundle has an opening angle in the width direction (y) of 6 to 12 degrees, preferably of 7 to 11 degrees, in particular of 9 degrees.

4. Inspection lamp (10) according to one of the preceding claims, **characterized in that** the LED arrangement (15) has a plurality of LEDs (22) which are arranged on an imaginary straight line running in the longitudinal direction (x).

5. Inspection lamp (10) according to claim 2, **characterized in that** the collimator optics (16) and the light output opening (2) are at least half as long, preferably more than 2/3 as long, as the housing (1).

6. Inspection lamp (10) according to one of the preceding claims, **characterized in that** the outer contour of the cross-section of the housing (1) is essentially constant in the longitudinal direction (x).

7. Inspection lamp (10) according to one of the preceding claims, **characterised by** a cable receiving channel (29) which is provided circumferentially at the housing (1) and serves to receive a mains cable (11) of the inspection lamp (10), the cable receiving channel running expediently around the housing.

8. Inspection lamp (10) according to one of the preceding claims, **characterized in that** two mutually facing L-shaped cable holding elements (14) are arranged respectively on end faces (7, 8) of the housing (1).

9. Inspection lamp (10) according to one of the preceding claims, **characterized in that** the collimator optics (16) have a central section (37) and two leg sections (38) arranged on both sides of the central section (37) in the transverse direction, the central section (37) and the leg sections (38) extending in the longitudinal direction (x).

10. Inspection lamp according to claim 9, **characterized in that** the leg portions (18) serve to bundle the light emitted by the LEDs (22) and to fix the collimator optics (16) in the housing (1).

11. Inspection lamp according to Claim 10, **characterized in that** latching arms (46) are provided in the interior of the housing (1), which are aligned orthogonally to the longitudinal and transverse directions (x, y) and are in engagement with the leg sections (18).

12. A method for inspecting surface structures, comprising the steps of: positioning an inspection lamp (10) according to any one of claims 1 to 11 on a wall surface to be inspected so that a lateral longitudinal side (5, 6) of the inspection lamp (10) rests against the wall surface; and illuminating the wall surface with the inspection lamp (10), wherein the directional beam (18) of the light bundle generated by the inspection lamp (10) runs substantially parallel to the wall surface.

## Revendications

1. Lampe de vérification (10) servant à la vérification de structures superficielles, avec un boîtier (1) allongé s'étendant dans une direction longitudinale (x), dans lequel sont disposés un ensemble de DEL (15) et une optique de collimateur (16) allongée s'étendant dans la direction longitudinale (x), dans laquelle l'optique de collimateur (16) est réalisée pour regrouper une lumière émise par l'ensemble de DEL (15) en un faisceau de lumière s'étendant dans la direction longitudinale (x), dont l'angle d'ouverture (α) est inférieur à 20 degrés dans un sens de la largeur (y) orthogonal par rapport à la direction longitudinale (x), **caractérisée en ce que** la lampe de vérification (10) est réalisée sous la forme d'une lampe portative pouvant être déplacée librement et pouvant être positionnée, dans laquelle le boîtier (1) dispose de côtés longitudinaux (5, 6) latéraux s'étendant de manière perpendiculaire par rapport au sens de la largeur (y), qui sont configurés de telle manière qu'en cas d'appui stable sans basculement des côtés longitudinaux (5, 6) latéraux au niveau d'un mur sensiblement plan, le rayon directionnel (18) du faisceau de lumière s'étend de manière parallèle par rapport au mur, dans laquelle le boîtier (1) présente une configuration de base allongée sensiblement de forme rectangulaire, dont la profondeur est inférieure à sa largeur.

2. Lampe de vérification (10) selon l'une quelconque des revendications précédentes, **caractérisée en ce que** le boîtier (1) présente au niveau d'un côté avant (3) une ouverture de sortie de lumière (2) allongée s'étendant dans la direction longitudinale (x) et l'optique de collimateur est disposée de telle manière que le rayon directionnel (18) du faisceau de lumière s'étend de manière perpendiculaire par rapport au côté avant (3).

3. Lampe de vérification (10) selon l'une quelconque des revendications précédentes, **caractérisée en ce que** le faisceau de lumière présente dans le sens de la largeur (y) un angle d'ouverture de 6 à 12 degrés, de préférence de 7 à 11 degrés, en particulier de 9 degrés.

4. Lampe de vérification (10) selon l'une quelconque des revendications précédentes, **caractérisée en ce que** l'ensemble de DEL (15) présente une pluralité de DEL (22), qui sont disposées sur une droite imaginaire s'étendant dans la direction longitudinale (x).

5. Lampe de vérification (10) selon la revendication 2, **caractérisée en ce que** la longueur de l'optique de collimateur (16) et celle de l'ouverture de sortie de lumière (2) sont au moins deux fois plus courtes, de préférence sont supérieures à 2/3 de la longueur du boîtier (1).

6. Lampe de vérification (10) selon l'une quelconque des revendications précédentes, **caractérisée en ce que** le contour extérieur de la section transversale du boîtier (1) est sensiblement constant dans la direction longitudinale (x).

7. Lampe de vérification (10) selon l'une quelconque des revendications précédentes, **caractérisée par** une goulotte de réception de câble (29), qui est prévue côté périphérie au niveau du boîtier (1) et sert à recevoir un câble secteur (11) de la lampe de vérification (10), dans laquelle la goulotte de réception de câble s'étend de manière appropriée tout autour du boîtier.

8. Lampe de vérification (10) selon l'une quelconque des revendications précédentes, **caractérisée en ce que** sont disposés au niveau de côtés frontaux (7, 8) du boîtier (1) respectivement deux éléments de maintien de câble (14) en forme de L tournés l'un vers l'autre.

9. Lampe de vérification (10) selon l'une quelconque des revendications précédentes, **caractérisée en ce que** l'optique de collimateur (16) dispose d'une section centrale (37) et de deux sections de branche (38) disposées dans la direction transversale de part et d'autre au niveau de la section centrale (37), dans laquelle la section centrale (37) et les sections de branche (38) s'étendent dans la direction longitudinale (x).

10. Lampe de vérification selon la revendication 9, **caractérisée en ce que** les sections de branche (18) servent au regroupement de la lumière émise par les DEL (22) et à la fixation de l'optique de collimateur (16) dans le boîtier (1).

11. Lampe de vérification selon la revendication 10, **caractérisée en ce que** sont prévus dans l'intérieur du boîtier (1) des bras d'enclenchement (46), qui sont orientés de manière orthogonale par rapport aux directions longitudinale et transversale (x, y) et sont en prise avec les sections de branche (18).

12. Procédé servant à la vérification de structures superficielles, comprenant les étapes de : positionnement d'une lampe de vérification (10) selon l'une quelconque des revendications 1 à 11 au niveau d'une surface murale à tester, de sorte qu'un côté longitudinal (5, 6) latéral de la lampe de vérification (10) repose au niveau de la surface murale et d'éclairage de la surface murale avec la lampe de vérification (10), dans lequel le rayon directionnel (18) du faisceau de lumière généré par la lampe de vérification (10) s'étend sensiblement de manière parallèle par rapport à la surface murale.
